# EUROPÄISCHE PATENTSCHRIFT

(11) **EP 4 461 190 B1**
(45) Veröffentlichungstag und Bekanntmachung des Hinweises auf die Patenterteilung: **25.03.2026**
(21) Anmeldenummer: 24169230.0
(22) Anmeldetag: 09.04.2024
(51) Int. Cl.: A47L 11/40, A47L 11/30, G05D 1/00, G05D 1/648, G05D 105/10, G05D 107/40, G05D 109/10

(54) **VERFAHREN UND GERÄT ZUM AUFWISCHEN EINER FLÜSSIGKEITSANSAMMLUNG**
METHOD AND DEVICE FOR MOPPING UP A LIQUID ACCUMULATION
PROCÉDÉ ET DISPOSITIF D'ESSUYAGE D'UNE ACCUMULATION DE LIQUIDE

(30) Priorität: 10.05.2023 DE 102023204345
(43) Veröffentlichungstag der Anmeldung: 13.11.2024
(73) Patentinhaber: BSH Hausgeräte GmbH, 81739 München (DE)
(72) Erfinder: Schnitzer, Frank, 97616 Bad Neustadt (DE); Weidl, Manuel, 97616 Salz (DE)

(56) Entgegenhaltungen:
- WO-A1-2022/170722
- KR-B1- 102 278 899
- US-A1- 2022 000 328
- US-B2- 10 952 586
- US-B2- 9 427 127

## Beschreibung

Die Erfindung betrifft ein Verfahren zum Steuern eines mobilen, selbstfahrenden Geräts, insbesondere ein Bodenreinigungsgerät, wie einen Saug- und/oder Kehr- und Wischroboter, zum Aufwischen einer Flüssigkeitsansammlung, sowie ein mobiles, selbstfahrendes Gerät, das nach einem derartigen Verfahren gesteuert wird.

Mobile, selbstfahrende Geräte wie beispielsweise Saugroboter haben die Aufgabe, autonom möglichst eine gesamte Bodenfläche zu reinigen. Insbesondere sollen Saugroboter ihren Nutzern die Aufgabe abnehmen, den Boden regelmäßig von Staub und Schmutz zu befreien. Neben dem reinen Staubsaugen wächst immer mehr die Nachfrage der Nutzer nach einer Nassreinigung nach dem Trockenreinigen. Hierfür sind Reinigungsroboter im Einsatz, die zusätzlich neben der Saugfunktion mit einer Wischfunktion ausgestattet sind, also den Boden sowohl saugen als auch wischen können. Meist haben diese Saug-Wisch-Kombigeräte im vorderen Bereich ein Trockenreinigungsmodul mit einem Saugmund zum Kehren und Saugen und im hinteren Bereich ein Nassreinigungsmodul. Am Saugmund ist häufig eine Gummibeziehungsweise Dichtlippe angeordnet, die bis auf den Boden reicht, Staub vor sich herschieben kann und die Kehrwirkung unterstützt.

Ein Saugroboter wird in der WO 2022/170722 A1 offenbart.

Es besteht jedoch die Gefahr, dass die Dichtlippe Flüssigkeiten, die sich auf dem Boden befinden, wie beispielsweise Wasserlachen, Pfützen oder umgekippte Getränke, vor sich herschieben beziehungsweise diese auf dem Boden als dünnen Film verteilen. Das Nassreinigungsmodul kann zwar die verteilte Flüssigkeit aufwischen. Jedoch besteht die Gefahr, dass nachteilig sichtbare Spuren der Flüssigkeit auf dem Boden zurückbleiben, zum Beispiel im Fall, dass das Nassreinigungsmodul nicht zu beiden Seiten hin breiter als das Trockenreinigungsmodul ist, dass der Roboter eine nicht gerade Bahn fährt, beispielsweise bei Kurvenfahrten, oder dass der Roboter aufgrund der Gegebenheiten seiner Umwelt nicht jede Stelle mit dem Nassreinigungsmodul erreichen kann, zum Beispiel an Raumecken, in nahen Umgebungen von Hindernissen oder an der Basisstation beim Andocken. Auch besteht die Gefahr, dass Antriebseinheiten des Roboters nasse Bereiche überrollen und mit feuchten Rädern den Boden mit Spuren verunreinigen.

Weiter besteht die Gefahr, dass der Roboter die Flüssigkeit teilweise einsaugt, sodass diese in einen Staubbehälter gelangt, sich dort mit Staub mischt und sich eventuell im Filter festsetzt oder interne Komponenten schädigt.

Um diese Problematik zu umgehen, weisen einige Roboter das Nassreinigungsmodul im in Fahrtrichtung vorderen Bereich auf. Hierbei wird jedoch der Boden gewischt, bevor er von Staub befreit wird. Dadurch sammeln sich nachteilig schnell Verunreinigungen am Wischtuch an, sodass die Reinigungswirkung des Wischtuchs schnell nachlässt und dieses somit in kurzen Zeitintervallen vom Nutzer ausgetauscht oder gereinigt werden muss.

Aufgabe der Erfindung ist es, ein Verfahren zum Aufwischen einer Flüssigkeitsansammlung mit einem mobilen, selbstfahrenden Gerät bereitzustellen, bei dem die oben genannten Nachteile vermieden werden, und insbesondere die Gefahren eines unerwünschten Verteilens von Flüssigkeiten reduziert werden, wobei gleichzeitig ein effektives Aufwischen von Flüssigkeiten bereitgestellt wird.

Diese Aufgabe wird durch ein Verfahren zum Steuern eines mobilen, selbstfahrenden Geräts mit den Merkmalen des Anspruchs 1 sowie durch ein mobiles, selbstfahrendes Gerät mit den Merkmalen des Anspruchs 9 gelöst. Vorteilhafte Ausgestaltungen und Weiterbildungen sind Gegenstand der Unteransprüche.

Erfindungsgemäß umfasst ein Verfahren zum Steuern eines mobilen, selbstfahrenden Geräts, insbesondere eines Bodenreinigungsgeräts, wie ein Saug- und/oder Kehr- und Wischroboter, zum Aufwischen einer Flüssigkeitsansammlung folgende Verfahrensschritte:
- Befahren einer zur Reinigung vorgesehenen Bodenfläche in Fahrtrichtung in Vorwärtsbewegung des Geräts und Reinigen der Bodenfläche mit einem Trockenreinigungsmodul und/oder einem Nassreinigungsmodul des Geräts,
- Detektieren der Flüssigkeitsansammlung in Fahrtrichtung vor dem Gerät in einem Feuchtbereich,
- Beenden der Vorwärtsbewegung vor dem Feuchtbereich und Drehen des Geräts um im Wesentlichen 180°,
- Befahren des Feuchtbereichs in Rückwärtsbewegung in Fahrtrichtung des Geräts und Aufwischen der Flüssigkeitsansammlung mit dem Nassreinigungsmodul.

Vorliegend wird insbesondere ein Verschmutzen und/oder Verkleben des Trockenreinigungsmoduls durch eine auf dem Boden verteilte Flüssigkeitsansammlung vermieden, indem das Gerät in Bereichen mit Flüssigkeiten rückwärtsfahrend reinigt und somit die Flüssigkeiten mit dem Nassreinigungsmodul aufnimmt, bevor diese zu dem Trockenreinigungsmodul gelangen können. Es wird also mit dem Nassreinigungsmodul ein trockener Fahrweg erzeugt, bevor das Trockenreinigungsmodul diesen getrockneten Fahrweg passiert. In Bereichen, die trocken sind, in denen folglich keine Flüssigkeitsansammlung ist, reinigt das Gerät vorwärtsfahrend, also insbesondere zuerst mit dem Trockenreinigungsmodul und nachreinigend mit dem Nassreinigungsmodul.

Vorzugsweise ist das Trockenreinigungsmodul in Fahrtrichtung in Vorwärtsbewegung des Geräts in einem vorderen Bereich und das Nassreinigungsbereich in einem hinteren Bereich des Geräts angeordnet. Detektiert das Gerät Flüssigkeit vor sich auf seinem Fahrweg, stoppt es seine Vorwärtsbewegung bevor es die Flüssigkeit berührt. Das Gerät dreht sich auf der Stelle um etwa 180° und setzt seine Fahrt rückwärts gerichtet fort, sodass zuerst das Nassreinigungsmodul und nicht das Trockenreinigungsmodul mit der Flüssigkeit in Kontakt kommt.

Durch das Umdrehen der Fahrtrichtung des Geräts vor der Flüssigkeitsansammlung kann diese sicher vom Boden entfernt werden, ohne dabei vom Gerät im Raum verteilt zu werden. Dabei kommen Komponenten des Geräts mit Staubkontakt, wie beispielsweise ein Saugmund, eine Dichtlippe, eine Bürstenwalze, Seitenbürsten, Antriebsräder und/oder ein Staubbehälter mit Filter, nicht in Kontakt mit der Flüssigkeit und bleiben trocken. Ein Verkleben des mit dem Gerät aufgenommenen Staubs und der Flüssigkeit erfolgt somit nicht beziehungsweise mit Vorteil deutlich reduziert. Das Fahrverhalten beziehungsweise Reinigungsverhalten des Geräts ist vorliegend mit Vorteil situativ angepasst.

Unter einem mobilen, selbstfahrenden Gerät ist insbesondere ein Bodenreinigungsgerät, zu verstehen, welches beispielsweise im Haushaltsbereich Bodenflächen autonom bearbeiten kann. Hierunter zählen unter anderem Saug- und/oder Kehr- und Wischroboter. Insbesondere ist das mobile, selbstfahrende Gerät ein Kombigerät, das sowohl trocken- als auch nassreinigen kann. Die Geräte arbeiten im Betrieb (Reinigungsbetrieb) bevorzugt ohne oder mit möglichst wenig Nutzereingriff. Beispielsweise fährt das Gerät selbsttätig in einen vorgegebenen Raum, um entsprechend einer vorgegebenen und einprogrammierten Verfahrensstrategie den Boden zu reinigen.

Um hierbei jegliche individuellen Umgebungsbesonderheiten beachten zu können, findet bevorzugt eine Explorationsfahrt mit dem mobilen, selbstfahrenden Gerät statt. Unter einer Explorationsfahrt ist insbesondere eine Erkundungsfahrt zu verstehen, die dazu geeignet ist, eine zu bearbeitende Bodenfläche nach Hindernissen, Raumaufteilung und ähnlichem zu erkunden. Ziel einer Explorationsfahrt ist es insbesondere, Gegebenheiten des zu bearbeitenden Bodenbearbeitungsbereich einschätzen und/oder darstellen zu können.

Nach der Explorationsfahrt kennt das mobile, selbstfahrende Gerät seine Umgebung und kann diese in Form einer Umgebungskarte an den Nutzer weitergeben, zum Beispiel in einer App (Reinigungs-App) an einem Mobilgerät. In der Umgebungskarte kann dem Nutzer die Möglichkeit gegeben werden, mit dem mobilen, selbstfahrenden Gerät zu interagieren. Der Nutzer kann mit Vorteil Informationen in der Umgebungskarte einsehen und bei Bedarf ändern und/oder anpassen.

Unter einer Umgebungskarte ist insbesondere jegliche Karte zu verstehen, die geeignet ist, die Umgebung des Bodenbearbeitungsbereichs mit all seinen Hindernissen und Gegenständen darzustellen. Beispielsweise zeigt die Umgebungskarte den Bodenbearbeitungsbereich mit den darin enthaltenen Möbeln und Wänden skizzenartig an.

Die Umgebungskarte mit den Hindernissen wird vorzugsweise in der App an einem tragbaren Zusatzgerät dargestellt. Dies dient insbesondere der Visualisierung zu einer möglichen Interaktion für den Nutzer. Unter einem Zusatzgerät ist vorliegend insbesondere jegliches Gerät zu verstehen, das für einen Benutzer tragbar ist, das außerhalb des mobilen, selbstfahrenden Geräts angeordnet, insbesondere extern und/oder differenziert vom mobilen, selbstfahrenden Gerät ist, und zu einer Anzeige, Bereitstellung, Übermittlung und/oder Übertragung von Daten geeignet ist, wie beispielsweise ein Handy, ein Smartphone, ein Tablet und/oder ein Computer beziehungsweise Laptop.

Auf dem tragbaren Zusatzgerät ist die App, insbesondere die Reinigungs-App, installiert, die zur Kommunikation des mobilen, selbstfahrenden Geräts mit dem Zusatzgerät dient und insbesondere eine Visualisierung des Bodenbearbeitungsbereichs, also des zu reinigenden Wohnraums oder der zu reinigenden Wohnung beziehungsweise Wohnbereichs, insbesondere Innenbereichs, ermöglicht. Die App zeigt dem Nutzer dabei vorzugsweise den zu reinigenden Bereich als Umgebungskarte an.

Unter einer Flüssigkeitsansammlung ist insbesondere jegliche sich am Boden befindliche Ansammlung zu verstehen, die zumindest Komponenten einer feuchten Substanz aufweist. Hierunter zählen insbesondere Flüssigkeitslachen, Pfützen, verschüttete Getränke, feuchte oder nasse Fußabdrücke, von Haustieren abgegebener Urin und/oder übergelaufene Waschbecken, Duschen oder Badewannen.

Unter Fahrtrichtung in Vorwärtsbewegung ist insbesondere die Fahrbewegung des Geräts zu verstehen, die im Reinigungs- oder Fahrbetrieb in trockenen Bereichen des Bodens vorgesehen ist. Das Gerät fährt also mit seinem vorderen Bereich voraus entlang der vorgesehenen Fahrbahnen. Der hintere Bereich ist hierbei dem vorderen Bereich in der Bewegung nachgestellt. Insbesondere überfährt der vordere Bereich den zu reinigenden Boden zuerst, bevor der hintere Bereich diesen passiert.

Unter einer Rückwärtsbewegung in Fahrtrichtung ist insbesondere jegliche Fahrt zu verstehen, deren Fahrtrichtung gleichbleibt, wobei das Gerät verkehrt herum, also rückwärts fährt. Der Fahrweg und insbesondere die Richtung des vorgesehenen Fahrtwegs ändert sich folglich nicht. Das Gerät fährt weiter seine Bahn. Jedoch dreht es sich bei Fahrt der Bahn um, sodass es diese Bahn nun nicht mehr vorwärts sondern rückwärts entlang fährt. Das Gerät führt die Rückwärtsbewegung mit seinem hinteren Bereich voraus durch, wobei der vordere Bereich dem hinteren Bereich in der Bewegung nachgestellt ist. Der hintere Bereich überfährt den zu reinigenden Boden demnach zuerst, bevor der vordere Bereich diesen passiert.

Unter einem Trockenreinigungsmodul ist insbesondere ein Modul des Geräts zu verstehen, das für eine Trockenreinigung geeignet ist, also insbesondere zum Saugen und/oder Kehren vorgesehen ist. Beispielsweise weist das Trockenreinigungsmodul einen Saugmund mit Bürstenwalze und Dichtlippe sowie eine Seitenbürste an einem vorderen Gehäuseeck auf.

Unter einem Nassreinigungsmodul ist insbesondere ein Modul des Geräts zu verstehen, das für eine Nassreinigung geeignet ist, also insbesondere zum Wischen vorgesehen ist. Beispielsweise weist das Nassreinigungsmodul eine Wischeinheit, beispielweise ein Wischtuch/ -pad, und optional eine Behältereinheit, zum Beispiel einen Frischwassertank mit Reinigungsflüssigkeit, auf, wobei die Wischeinheit zum Wischen mit der Reinigungsflüssigkeit oder im Falle einer nicht vorhandenen Behältereinheit von extern befeuchtet werden kann. Auch die Verwendung mehrerer Wischtücher/-pads ist möglich. Diese können angetrieben sein, sodass sie sich relativ zum Gerät bewegen. Neben planen Wischtüchern/-pads können auch um eine horizontale Achse rotierende, zylindrische Wischrollen Verwendung finden. Damit die Wischeinheit im Betrieb nicht übermäßig mit Schmutz auf dem Boden in Kontakt kommt, ist eine Breite des Nassreinigungsmoduls bevorzugt gleich oder kleiner einer Breite des Trockenreinigungsmoduls.

Die Flüssigkeitsansammlung kann von dem Gerät detektiert werden. Vorzugsweise ist hierfür eine Detektionseinrichtung am Gerät vorgesehen, die dazu eingerichtet ist, eine Flüssigkeitsansammlung in einem Feuchtbereich zu detektieren, und die in einem Frontbereich des Geräts angeordnet ist. Der Feuchtbereich ist insbesondere der Bodenbereich, der die Flüssigkeitsansammlung umfasst. Der Frontbereich des Geräts ist insbesondere eine Frontseite des Geräts, also die Seite des Geräts, die in einem Normalbetrieb in Fahrtrichtung und Vorwärtsbewegung nach vorne gerichtet ist. Die Detektionseinrichtung ist zum Beispiel ein Sensor, der Informationen der Umgebung auswerten kann und in der Lage ist, Flüssigkeiten auf dem Boden zu erkennen, bevor das Gerät mit diesen in Kontakt kommt. Beispielsweise ist der Sensor eine nach vorne gerichtete Kamera, die zum Beispiel per Bildauswertung und Objekterkennung glänzende Flächen identifizieren kann. Alternativ ist die Detektionseinrichtung ein Feuchtigkeitssensor im Frontbereich der Geräteunterseite, der eine lokal ansteigende Luftfeuchtigkeit erkennen kann.

Unter einem Drehen des Geräts um im Wesentlichen 180° ist insbesondere eine Umkehrung des Geräts auf der Stelle zu verstehen, insbesondere ein Umkehren von einem vorderen Bereich nach hinten und von einem hinteren Bereich nach vorne (in Fahrtrichtung), also eine halbe Drehung um die eigene Geräteachse. Das Gerät führt also eine 180°-Wendung durch und steht anschließend rückwärst da. Dabei ist es selbstverständlich nicht zwingend erforderlich, dass das Gerät sich um exakt 180° dreht. Abweichungen hierbei sind mit inbegriffen, solange sich das Gerät nach seiner Drehung rückwärts in Fahrtrichtung weiter auf der vorgesehenen Bahn bewegen kann. Auch Abweichungen der für die Trockenreinigung vorgesehenen Bahn sind möglich, zum Beispiel um eine Flüssigkeitsansammlung zunächst vollständig zu bearbeiten.

Bei einer vorteilhaften Ausführungsform ist eine Reinigungsflüssigkeitszufuhr des Nassreinigungsmoduls in Vorwärtsbewegung in Fahrtrichtung des Geräts in einem aktiven Modus und in Rückwärtsbewegung in Fahrtrichtung des Geräts in einem inaktiven Modus. Beispielsweise wird in dem aktiven Modus die Wischeinheit mit Reinigungsflüssigkeit aus der Behältereinheit befeuchtet, während in dem inaktiven Modus bei der rückwärts gerichteten Bewegung des Geräts das Befeuchten aus dem eigenen Behälter gestoppt wird. Durch das Aufnehmen der Flüssigkeitsansammlung vom Boden ist die Wischeinheit bereits feucht genug, sodass nicht zusätzlich Reinigungsflüssigkeit vom Gerät zugeführt werden muss. Je nach Größe der Flüssigkeitsansammlung kann die Reaktivierung der Reinigungsflüssigkeitszufuhr zur Wischeinheit nach vorbestimmter Zeit wiederaufgenommen werden.

Bei einer weiteren vorteilhaften Ausführungsform führt das Gerät die Rückwärtsbewegung in Fahrtrichtung mit einseitigen Drehbewegungen bis zu 90°, beispielsweise um 30° bis 90°, zur Rückwärtsbewegung aus, falls sich der Feuchtbereich einseitig angeordnet zur Rückwärtsbewegung befindet. Deckt insbesondere eine Breite des Nassreinigungsmoduls nicht alle Kontaktpunkte des Geräts mit dem Boden ab, zum Beispiel die Antriebsräder, Stützrollen und/oder das Trockenreinigungsmodul, so ist eine geradlinige Rückwärtsfahrt nicht optimal zur Flüssigkeitsansammlungsaufnahme. Stattdessen fährt das Gerät eine kurze Strecke, die bevorzugt der halben bis maximal vollen Länge der Wischeinheit entspricht, bevor sich das Gerät auf der Stelle dreht, um die Wischeinheit seitlich der eigentlichen Fahrbahn wischen zu lassen. Das Gerät dreht sich abschließend wieder zurück und kann bei Erreichen der Rückwärtsfahrtrichtung eine weitere Strecke in Richtung der Flüssigkeitsansammlung fahren.

Bewegt sich das Gerät auf einer zur Flüssigkeitsansammlung benachbarten Bahn und erreicht eine Flüssigkeitsansammlung daher in etwa tangential, so dreht sich das Gerät bei der Rückwärtsfahrt nur in eine Richtung zur Seite, insbesondere zur Seite der Flüssigkeitsansammlung. Befindet sich die Flüssigkeitsansammlung dagegen nicht seitlich vom Gerät, sondern in etwa zentral, also insbesondere, wenn sich die Flüssigkeitsansammlung in der Nähe einer Raumwand befindet während das Gerät an der Raumwand entlangfährt, oder wenn das Gerät auf einer Transitfahrt ist, so führt das Gerät die Drehung um 30° bis 90° auf der Stelle für das Wischen in beide Richtungen durch, bevor das Gerät erneut ein Stück rückwärtsfährt. Vorzugsweise führt das Gerät die Rückwärtsbewegung in Fahrtrichtung mit beidseitigen Drehbewegungen um jeweils 30° bis 90° zur Rückwärtsbewegung aus, falls sich der Feuchtbereich beidseitig angeordnet zur Rückwärtsbewegung befindet.

Bei einer weiteren vorteilhaften Ausführungsform umfasst die Rückwärtsbewegung folgende Schritte:
- geradlinige Rückwärtsbewegung einer ersten kurzen Strecke zum Feuchtbereich hin, wobei die erste kurze Strecke vorzugsweise der halben bis maximal vollen Länge des Nassreinigungsmoduls entspricht,
- auf einer Stelle einseitiges oder beidseitiges Drehen des Geräts um 30° bis 90°,
- Zurückdrehen des Geräts in seine ursprüngliche Ausgangslage vor der Drehung, und
- Weiterfahrt in geradliniger Rückwärtsbewegung einer zweiten kurzen Strecke in den Feuchtbereich hinein, wobei die zweite kurze Strecke vorzugsweise der halben bis maximal vollen Länge des Nassreinigungsmoduls entspricht.

Die Verfahrensschritte des Drehens, des Zurückdrehens und der Weiterfahrt werden bevorzugt so lange wiederholt, bis der Feuchtbereich durchfahren ist. Dadurch kann verhindert werden, dass Flüssigkeit der Flüssigkeitsansammlung an der Wischeinheit vorbeigelangt und in Kontakt mit Antriebsrädern oder Saugmund kommt.

Besitzt das Nassreinigungsmodul am Gerät eine Breite, die alle Kontaktpunkte des Geräts mit dem Boden abdeckt, die Wischeinheit ist also breit ausgebildet, so kann auf das seitliche Drehen beim Rückwärtsfahren verzichtet werden und das Gerät führt eine durchgehende, geradlinige Rückwärtsbewegung durch.

Bei einer weiteren vorteilhaften Ausführungsform wird eine Länge des Feuchtbereichs in Fahrtrichtung bei dem Detektieren der Flüssigkeitsansammlung vor dem Drehen des Geräts bestimmt. Wie weit das Gerät also seine Fahrt rückwärts durchführen muss, um den Feuchtbereich vollständigen zu durchqueren, wird vorab direkt bei der Detektion der Flüssigkeitsansammlung zum Beispiel durch eine Kamera und Bildverarbeitung bestimmt.

Bei einer alternativen Ausführungsform wird ein Vorhandensein der Flüssigkeitsansammlung nach Befahren des Feuchtbereichs in vorbestimmten Wegstrecken überprüft, indem sich das Gerät in Fahrtrichtung in Vorwärtsbewegung zurückdreht und bestimmt, ob die Flüssigkeitsansammlung weiterhin vorhanden ist. Das Gerät dreht sich also nach einer definierten Wegstrecke, beispielsweise 0,5 m, wieder nach vorne und prüft erneut, ob weiterhin eine Flüssigkeitsansammlung erkannt wird.

Weiter alternativ kann das Gerät auf seiner Rückseite eine entsprechende Sensorik aufweisen, die geeignet ist, Flüssigkeiten zu erkennen, um das Ende der Flüssigkeitsansammlung zu bestimmen.

Ist die Flüssigkeitsansammlung nicht mehr nachzuweisen, also der Feuchtbereich zu Ende, kann das Gerät seine Fahrt vorwärtsfahrend fortsetzen.

Weiter betrifft die Erfindung ein mobiles, selbstfahrendes Gerät, insbesondere ein Bodenreinigungsgerät, wie einen Saug- und/oder Kehr- und Wischroboter, zum Aufwischen einer Flüssigkeitsansammlung, wobei das Gerät folgendes umfasst:
- eine Antriebseinrichtung zum Befahren einer zu reinigenden Bodenfläche,
- ein Trockenreinigungsmodul zum Trockenreinigen der Bodenfläche, das in Fahrtrichtung in Vorwärtsbewegung in einem vorderen Bereich des Geräts angeordnet ist,
- ein Nassreinigungsmodul zum Nassreinigen der Bodenfläche, das in Fahrtrichtung in Vorwärtsbewegung in einem hinteren Bereich des Geräts angeordnet ist,
- eine Detektionseinrichtung, die dazu eingerichtet ist, eine Flüssigkeitsansammlung in einem Feuchtbereich zu detektieren, und die in einem Frontbereich des Geräts angeordnet ist, und
- eine Verarbeitungseinrichtung, die dazu eingerichtet ist, bei Detektion der Flüssigkeitsansammlung das Gerät vor der Flüssigkeitsansammlung um im Wesentlichen 180° zu drehen und den Feuchtbereich in Rückwärtsbewegung in Fahrtrichtung zu befahren.

Jegliche Merkmale, Ausgestaltungen, Ausführungsformen und Vorteile das Verfahren betreffend finden auch in Zusammenhang mit dem erfindungsgemäßen Gerät Anwendung, und umgekehrt.

Bei einer vorteilhaften Ausführungsform umfasst das Gerät eine weitere Detektionseinrichtung, die dazu eingerichtet ist, die Flüssigkeitsansammlung in dem Feuchtbereich zu detektieren, und die in einem Rückbereich des Geräts angeordnet ist. Dadurch kann mit Vorteil ein Ende des Feuchtbereichs bestimmt werden, sodass das Gerät nach dem Durchqueren des Feuchtbereichs seine Vorwärtsfahrt wiederaufnehmen kann.

Bei einer weiteren vorteilhaften Ausführungsform umfasst das Nassreinigungsmodul zumindest eine Wischeinheit und eine Behältereinheit, wobei die Wischeinheit in einem aktiven Modus mit Flüssigkeit der Behältereinheit befeuchtet wird, und in einem inaktiven Modus eine Flüssigkeitszufuhr der Behältereinheit zur Wischeinheit ausgesetzt wird.

Die Erfindung wird anhand der nachfolgenden, lediglich Beispiele darstellenden Ausführungen der Erfindung näher erläutert. Es zeigen:
- Figuren 1A, 1B:: jeweils schematische Ansichten eines Ausführungsbeispiels eines mobilen, selbstfahrenden Geräts, das mittels eines erfindungsgemäßen Verfahrens steuerbar ist,
- Figuren 2A - 2C:: jeweils schematische Ansichten eines Ausführungsbeispiels eines erfindungsgemäßen Steuerverfahrens mit Schritten des 180°-Drehens,
- Figuren 3A - 3D:: jeweils schematische Ansichten eines Ausführungsbeispiels eines erfindungsgemäßen Steuerverfahrens mit einseitigen Dreh-Wisch-Bewegungen,
- Figuren 4A - 4C:: jeweils schematische Ansichten eines Ausführungsbeispiels eines erfindungsgemäßen Steuerverfahrens ohne Dreh-Wisch-Bewegungen,
- Figuren 5A - 5C:: jeweils schematische Ansichten eines Ausführungsbeispiels eines erfindungsgemäßen Steuerverfahrens mit beidseitigen Dreh-Wisch-Bewegungen, und
- Figur 6: ein schematisches Flussdiagramm betreffend das erfindungsgemäße Steuerverfahren.

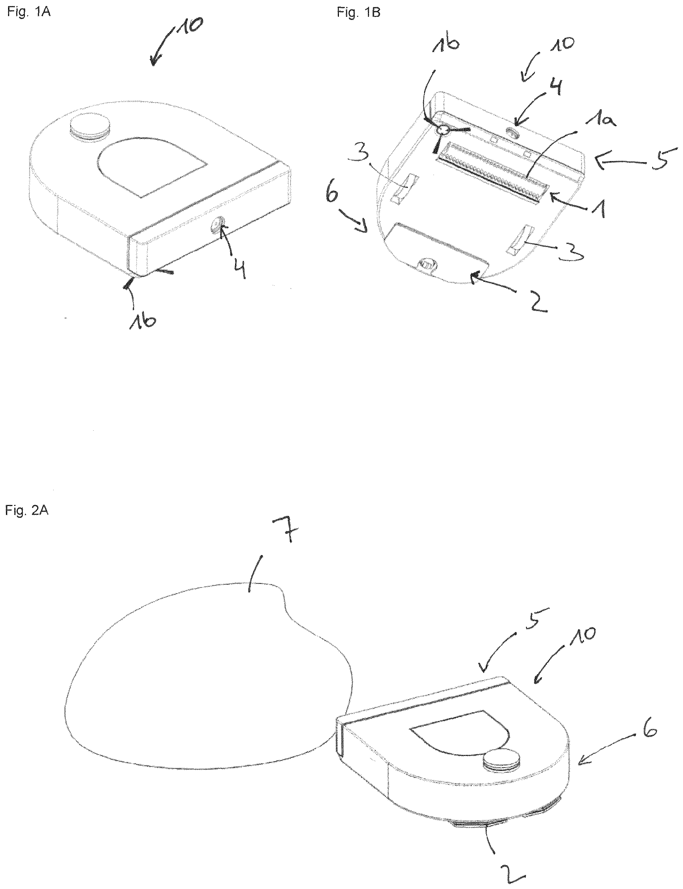

Figur 1A zeigt eine dreidimensionale Ansicht eines mobilen, selbstfahrenden Geräts 10, insbesondere eines Saug-Wisch-Kombigeräts beziehungsweise eines Saug-Wisch-Roboters, der zur autonomen Bodenreinigung vorgesehen ist. Figur 1B zeigt eine Unteransicht des Saug-Wisch-Roboters der Figur 1A. Der Roboter weist in einem vorderen Bereich 5 ein Trockenreinigungsmodul 1 auf, das sich über eine bestimmte Breite erstreckt. Das Trockenreinigungsmodul 1 umfasst einen Saugmund 1a mit einer Bürstenwalze sowie eine Seitenbürste 1b an einem vorderen Gehäuseeck. In einem hinteren Bereich 6 des Roboters befindet sich ein Nassreinigungsmodul 2, das mindestens ein Wischtuch oder Wischpad umfasst, das mit Reinigungsflüssigkeit aus einer Behältereinheit des Roboters oder extern befeuchtet werden kann. Damit das Wischtuch nicht übermäßig mit Schmutz auf dem Boden in Kontakt kommt, ist eine Breite des Wischtuchs gleich oder kleiner einer Breite des Trockenreinigungsmoduls 1.

In einem mittleren Bereich weist der Roboter eine Antriebseinrichtung, insbesondere Antriebsräder 3, zum Befahren einer zu reinigenden Bodenfläche auf. An einem Frontbereich ist mindestens ein Sensor 4 angeordnet, der Informationen der Umgebung auswerten kann und insbesondere geeignet ist, Flüssigkeitsansammlungen auf dem Boden zu erkennen, bevor der Roboter mit diesen in Kontakt kommt, also insbesondere hindurchfährt. Der Sensor 4 ist beispielsweise eine nach vorne gerichtete Kamera, die insbesondere per Bildauswertung und Objekterkennung glänzende Flächen identifiziert, oder ein Feuchtigkeitssensor im Frontbereich der Roboterunterseite, der eine lokal ansteigende Luftfeuchtigkeit detektiert.

Weiter weist der Roboter eine Verarbeitungseinrichtung auf (nicht dargestellt), die dazu eingerichtet ist, bei Detektion der Flüssigkeitsansammlung das Gerät vor der Flüssigkeitsansammlung um im Wesentlichen 180° zu drehen und den Feuchtbereich in Rückwärtsbewegung in Fahrtrichtung zu befahren. Detektiert der Roboter demnach eine Flüssigkeitsansammlung, beispielsweise eine Flüssigkeitslache, mit seinem Sensor 4, so stoppt er seine Vorwärtsbewegung, bevor er die Flüssigkeit berührt.

Das Fahrverhalten des Roboters nach detektierter Flüssigkeitsansammlung 7 ist in den Figuren 2A bis 2C dargestellt.

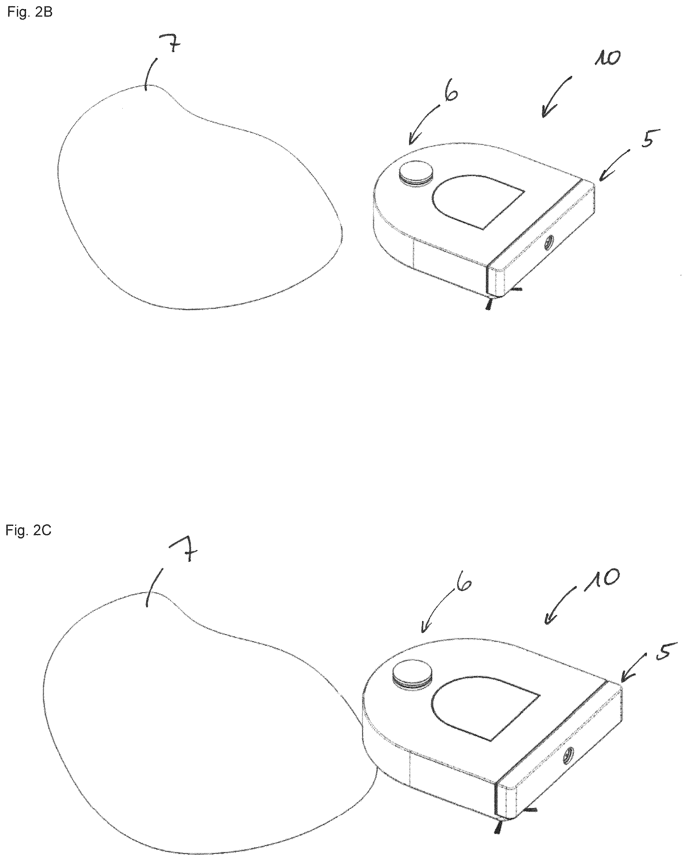

Der Roboter fährt zur Bodenreinigung seine vorgesehenen Bahnen in Vorwärtsbewegung. Detektiert er mit dem Sensor 4 eine Flüssigkeitsansammlung 7 egal welcher Art, so stoppt er seine Vorwärtsbewegung vor der Flüssigkeit, ohne diese zu durchfahren, wie es in Figur 2A dargestellt ist. Anschließend dreht sich der Roboter um etwa 180° auf der Stelle, sodass sein hinterer Bereich 6 nun in Fahrtrichtung vorne und sein vorderer Bereich 5 nun in Fahrtrichtung hinten ausgerichtet sind, wie es in Figur 2B gezeigt ist. Nun nähert sich der Roboter der Flüssigkeitsansammlung 7 rückwärts, bis das Nassreinigungsmodul Kontakt zur Flüssigkeit hat (siehe Figur 2C), sodass das Wischtuch die Flüssigkeit der Flüssigkeitsansammlung 7 aufnehmen kann, bevor der Roboter die Flüssigkeit mit seinem Trockenreinigungsmodul überfährt.

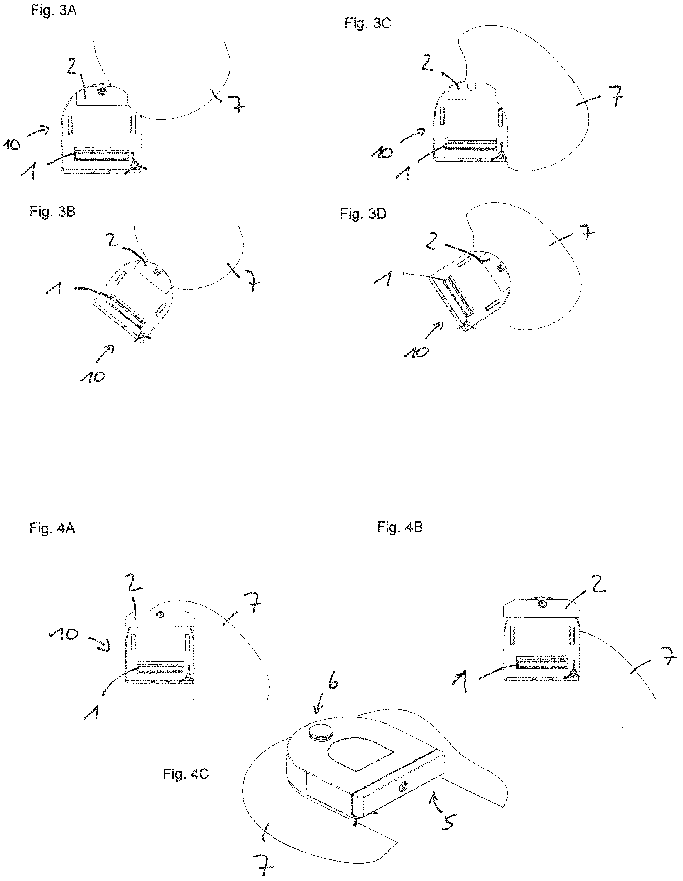

Deckt die Breite des Nassreinigungsmoduls 2 nicht alle Kontaktpunkte des Roboters mit dem Boden ab, insbesondere die Antriebsräder 3 und das Trockenreinigungsmodul 1, so ist eine einfache, geradlinige durch die Feuchtigkeit durchgehende Rückwärtsbewegung zum Wischen nicht geeignet, ohne sich der Gefahr des Verwischens oder Verteilens der Flüssigkeit auszusetzen. In diesem Fall ist das Fahrverhalten des Roboters, das in den Figuren 3A bis 3D gezeigt ist, vorteilhaft. Das Gerät 10 fährt, wie es in Figur 3A dargestellt ist, in einer geradlinigen Rückwärtsbewegung eine erste kurze Strecke zum Feuchtbereich hin beziehungsweise mit seinem vorderen Bereich in die Flüssigkeitsansammlung 7 hinein, bis der hineingefahrene Weg etwa der halben bis maximal vollen Länge des Nassreinigungsmoduls 2 entspricht. Anschließend bleibt der Roboter stehen und dreht sich auf der Stelle in Richtung Feuchtbereich, um das Nassreinigungsmodul 2 seitlich des eigentlichen Fahrwegs des Roboters wischen zu lassen (siehe Figur 3B). Hierbei erfolgt eine Drehung des Roboters auf der Stelle um etwa 30° bis 90° relativ zur eigentlichen Fahrtrichtungsachse der Rückwärtsbewegung des Roboters, also zur Rückwärtsbewegungsrichtung. Sofort anschließend dreht sich der Roboter auf der Stelle wieder zurück zur Ausgangslage der Rückwärtsbewegung, also zurück zur eigentlichen Fahrtrichtungsachse der Rückwärtsbewegung des Roboters. Bei Erreichen der Rückwärtsfahrtrichtung fährt der Roboter eine zweite kurze Strecke in geradliniger Rückwärtsbewegung in den Feuchtbereich hinein, wie es in Figur 3C gezeigt ist. Die zweite kurze Strecke entspricht wieder etwa der halben bis maximal vollen Länge des Nassreinigungsmoduls 2. Hier bleibt der Roboter stehen, und führt die Drehung um 30° bis 90° einschließlich Zurückdrehen ein zweites Mal aus, wie es in Figur 3D dargestellt ist, um die Flüssigkeitsansammlung 7 im Feuchtbereich weiter aufzuwischen. Die Schritte des stückweiten Weiterfahrens in den Feuchtbereich und anschließender Drehung um 30° bis 90° einschließlich Zurückdrehung werden so oft wiederholt, bis der Feuchtbereich vollständig durchfahren ist. Anschließend dreht sich der Roboter wieder um 180° in Vorwärtsrichtung, um den Boden in gewohnter Weise entsprechend seines Reinigungsauftrags vorwärtsfahrend abzureinigen, wobei das Trockenreinigungsmodul 1 dem Nassreinigungsmodul 2 hierbei vorausfährt.

Bewegt sich der Roboter auf benachbarten Bahnen und erreicht einen Feuchtbereich im Wesentlichen tangential, so wird das Verfahren der Figuren 3A bis 3D durchgeführt, bei dem sich das Gerät in eine Richtung zur Seite dreht, also in Richtung Feuchtbereich. Besitzt das Nassreinigungsmodul 2 am Roboter eine Breite, die alle Kontaktpunkte des Roboters mit dem Boden abdeckt, also das Nassreinigungsmodul 2 ist vergleichsweise breit ausgebildet, so wird auf das seitliche Drehen während der Durchfahrt durch den Feuchtbereich beim Rückwärtsfahren verzichtet, wie es in den Figuren 4A bis 4C gezeigt ist. In diesem Fall führt der Roboter eine durchgehende, geradlinige Rückwärtsbewegung durch. Nach dem Feuchtbereich dreht sich der Roboter wieder um 180° in Vorwärtsrichtung, um den Boden wie vorgesehen weiter zu bearbeiten, wobei das Trockenreinigungsmodul 1 dem Nassreinigungsmodul 2 vorgestellt ist.

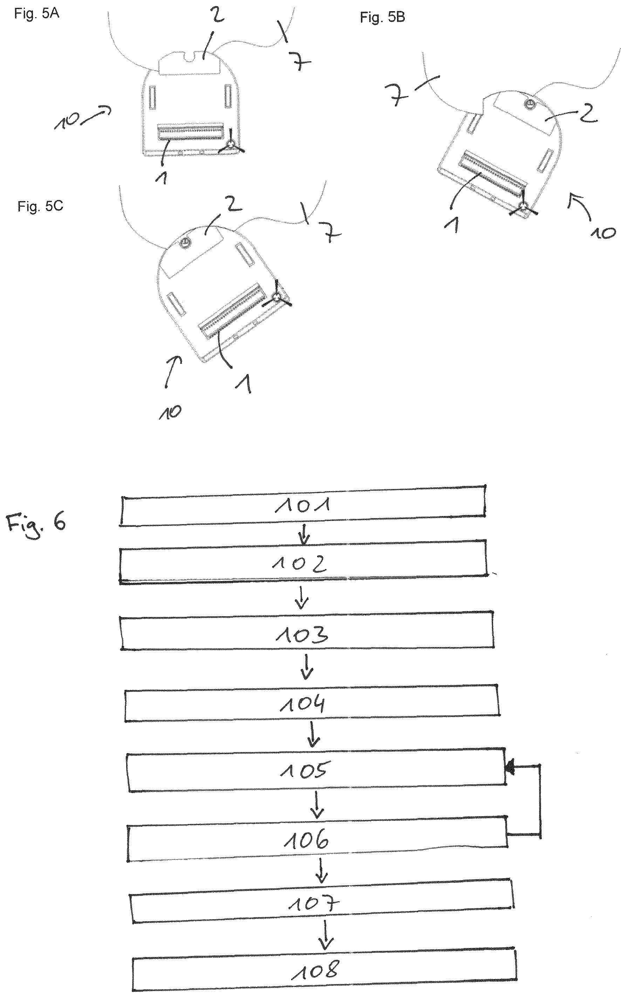

Befindet sich der Feuchtbereich nicht seitlich vom Roboter, sondern nahezu zentral, zum Beispiel, wenn sich die Flüssigkeitsansammlung in der Nähe einer Raumwand befindet, oder wenn der Roboter auf einer Transitfahrt ist, und ist die Breite des Nassreinigungsmoduls 2 geringer als die Kontaktpunkte des Roboters mit dem Boden, so führt der Roboter die teilweise Drehung um 30° bis 90° für das Wischen in beide Richtungen zur Fahrtrichtungsachse der Rückwärtsbewegung aus, bevor der Roboter erneut stückweise rückwärtsfährt. Dieses Fahrverhalten ist in den Figuren 5A bis 5C dargestellt. Erst fährt der Roboter eine erste kurze Strecke in den Feuchtbereich hinein (Figur 5A). Dann dreht der Roboter auf der Stelle um 30° bis 90° in eine Richtung relativ zur Fahrtrichtungsachse der Rückwärtsbewegung (Figur 5B), um sich anschließend sofort wieder in die Ausgangslage zurückzudrehen. Nun erfolgt auf derselben Stelle eine Drehung um 30° bis 90° in die andere Richtung relativ zur Fahrtrichtungsachse der Rückwärtsbewegung (Figur 5C), um sich ebenfalls wieder sofort in die Ausgangslage zurückzudrehen. Anschließend erfolgt eine Weiterfahrt in Fahrtrichtungsachse in geradliniger Rückwärtsbewegung entlang einer zweiten kurzen Strecke in den Feuchtbereich hinein. Dieses Fahrverhalten mit beidseitiger Drehung wird ebenfalls durchgeführt, falls der Roboter eine seitliche Ausdehnung des Feuchtbereichs nicht bestimmen kann.

Wie weit der Roboter seine Rückwärtsfahrt durchzuführen hat, wird vorab bei der Detektion der Flüssigkeitsansammlung durch die Detektionseinrichtung bestimmt. Alternativ dreht sich der Roboter jeweils nach einer vordefinierten Wegstrecke von beispielsweise 0,5m nach vorne in Vorwärtsrichtung um zu prüfen, ob eine Flüssigkeitsansammlung weiterhin erkannt wird. Weiter alternativ weist der Roboter auf seiner Rückseite entgegengesetzt zur Frontseite eine weitere Detektionseinrichtung auf, um das Ende des Feuchtbereichs zu bestimmen. Ist der Feuchtbereich nicht mehr nachzuweisen, kann der Roboter seine Fahrt wie gewohnt in Vorwärtsrichtung fortsetzen und seinen Reinigungsauftrag fortführen.

Während der rückwärts gerichteten Bewegung stoppt der Roboter das Befeuchten des Wischtuchs des Nassreinigungsmoduls 2 aus dem eigenen Behälter, um eine zu hohe Feuchtigkeit im Wischtuch und damit eine geringere Flüssigkeitsaufnahme vom Boden zu vermeiden. Anschließend, also nach Durchfahrt durch den Feuchtbereich und nach Drehen des Roboters in Vorwärtsrichtung, wird die Reaktivierung der Pumpe zum Befeuchten des Wischtuchs wiederaufgenommen.

In Figur 6 ist ein Flussdiagramm gezeigt, das den Ablauf des Fahrverhaltens des Roboters bei Vorhandensein einer Flüssigkeitsansammlung in seinem Bodenbearbeitungsbereich darstellt. In Schritt 101 führt der Roboter seinen Reinigungsauftrag vorwärtsfahrend aus. Erkennt der Roboter vor sich eine Flüssigkeitsansammlung auf dem Boden (Schritt 102), wird ein Aufwischverfahren eingeleitet. Hierzu dreht sich der Roboter um 180° auf der Stelle vor der Flüssigkeitsansammlung (Schritt 103). Anschließend nähert sich der Roboter der Flüssigkeitsansammlung rückwärtsfahrend bis das Nassreinigungsmodul, insbesondere das Wischtuch, Kontakt zur Flüssigkeitsansammlung hat (Schritt 104). Bei Kontakt dreht sich der Roboter ein- oder beidseitig um 30° bis 90° auf der Stelle und anschließend wieder zurück in Ausgangslage (Lage vor der Drehbewegung) (Schritt 105). Bei Erreichen der Ausgangslage fährt der Roboter ein Stück rückwärts in die Flüssigkeitsansammlung hinein (Schritt 106). Die Schritte 105 und 106 werden so lange wiederholt, bis der Roboter das Ende der Flüssigkeitsansammlung erreicht (Schritt 107). Am Ende der Flüssigkeitsansammlung dreht sich der Roboter um 180° in Vorwärtsrichtung und setzt seine Reinigungsfahrt vorwärtsfahrend fort (Schritt 108).

## Patentansprüche

1. Verfahren zum Steuern eines mobilen, selbstfahrenden Geräts (10), insbesondere Bodenreinigungsgeräts, wie ein Saug- und/oder Kehr- und Wischroboter, zum Aufwischen einer Flüssigkeitsansammlung (7), wobei das Verfahren folgendes umfasst:
- Befahren einer zur Reinigung vorgesehenen Bodenfläche in Fahrtrichtung in Vorwärtsbewegung des Geräts (10) und Reinigen der Bodenfläche mit einem Trockenreinigungsmodul (1) und/oder einem Nassreinigungsmodul (2) des Geräts (10),
- Detektieren der Flüssigkeitsansammlung (7) in Fahrtrichtung vor dem Gerät (10) in einem Feuchtbereich,
- Beenden der Vorwärtsbewegung vor dem Feuchtbereich und Drehen des Geräts (10) um im Wesentlichen 180°,
- Befahren des Feuchtbereichs in Rückwärtsbewegung in Fahrtrichtung des Geräts (10) und Aufwischen der Flüssigkeitsansammlung (7) mit dem Nassreinigungsmodul (2).

2. Verfahren nach Anspruch 1, wobei eine Reinigungsflüssigkeitszufuhr des Nassreinigungsmoduls (2) in Vorwärtsbewegung in Fahrtrichtung des Geräts (10) in einem aktiven Modus und in Rückwärtsbewegung in Fahrtrichtung des Geräts (10) in einem inaktiven Modus ist.

3. Verfahren nach einem der vorhergehenden Ansprüche, wobei das Gerät (10) die Rückwärtsbewegung in Fahrtrichtung mit einseitigen Drehbewegungen um 30° bis 90° zur Rückwärtsbewegung ausführt, falls sich der Feuchtbereich einseitig angeordnet zur Rückwärtsbewegung befindet.

4. Verfahren nach einem der vorhergehenden Ansprüche, wobei das Gerät (10) die Rückwärtsbewegung in Fahrtrichtung mit beidseitigen Drehbewegungen um jeweils 30° bis 90° zur Rückwärtsbewegung ausführt, falls sich der Feuchtbereich beidseitig angeordnet zur Rückwärtsbewegung befindet.

5. Verfahren nach einem der vorhergehenden Ansprüche 3 oder 4, wobei die Rückwärtsbewegung folgende Schritte umfasst:
- geradlinige Rückwärtsbewegung einer ersten kurzen Strecke zum Feuchtbereich hin,
- auf einer Stelle einseitiges oder beidseitiges Drehen des Geräts (10) um 30° bis 90°,
- Zurückdrehen des Geräts (10) in seine ursprüngliche Ausgangslage vor der Drehung, und
- Weiterfahrt in geradliniger Rückwärtsbewegung einer zweiten kurzen Strecke in den Feuchtbereich hinein.

6. Verfahren nach Anspruch 5, wobei sich die Schritte des Drehens, des Zurückdrehens und der Weiterfahrt so lange wiederholen, bis der Feuchtbereich durchfahren ist.

7. Verfahren nach einem der vorhergehenden Ansprüche, wobei eine Länge des Feuchtbereichs in Fahrtrichtung bei dem Detektieren der Flüssigkeitsansammlung (7) vor dem Drehen des Geräts (10) bestimmt wird.

8. Verfahren nach einem der vorhergehenden Ansprüche 1 bis 6, wobei ein Vorhandensein der Flüssigkeitsansammlung (7) nach Befahren des Feuchtbereichs nach vorbestimmten Wegstrecken überprüft wird, indem sich das Gerät (10) in Fahrtrichtung in Vorwärtsbewegung zurückdreht und bestimmt, ob die Flüssigkeitsansammlung weiterhin vorhanden ist.

9. Mobiles, selbstfahrendes Gerät (10), insbesondere Bodenreinigungsgerät, wie ein Saug- und/oder Kehr- und Wischroboter, zum Aufwischen einer Flüssigkeitsansammlung (7), wobei das Gerät (10) folgendes umfasst:
- eine Antriebseinrichtung (3) zum Befahren einer zu reinigenden Bodenfläche,
- ein Trockenreinigungsmodul (1) zum Trockenreinigen der Bodenfläche, das in Fahrtrichtung in Vorwärtsbewegung in einem vorderen Bereich (5) des Geräts (10) angeordnet ist,
- ein Nassreinigungsmodul (2) zum Nassreinigen der Bodenfläche, das in Fahrtrichtung in Vorwärtsbewegung in einem hinteren Bereich (6) des Geräts (10) angeordnet ist,
- eine Detektionseinrichtung (4), die dazu eingerichtet ist, eine Flüssigkeitsansammlung (7) in einem Feuchtbereich zu detektieren, und die in einem Frontbereich des Geräts (10) angeordnet ist, und **dadurch gekennzeichnet, dass** das Gerät (10) folgendes umfasst:
- eine Verarbeitungseinrichtung, die dazu eingerichtet ist, bei Detektion der Flüssigkeitsansammlung (7) das Gerät (10) vor der Flüssigkeitsansammlung (7) um im Wesentlichen 180° zu drehen und den Feuchtbereich in Rückwärtsbewegung in Fahrtrichtung zu befahren.

10. Mobiles, selbstfahrendes Gerät (10) nach Anspruch 9, umfassend eine weitere Detektionseinrichtung, die dazu eingerichtet ist, die Flüssigkeitsansammlung (7) in dem Feuchtbereich zu detektieren, und die in einem Rückbereich des Geräts (10) angeordnet ist.

11. Mobiles, selbstfahrendes Gerät (10) nach Anspruch 9 oder 10, wobei das Nassreinigungsmodul (2) zumindest eine Wischeinheit und eine Behältereinheit umfasst, wobei die Wischeinheit in einem aktiven Modus mit Flüssigkeit der Behältereinheit befeuchtet wird, und in einem inaktiven Modus eine Flüssigkeitszufuhr der Behältereinheit zur Wischeinheit ausgesetzt ist.

## Claims

1. Method for controlling a mobile, self-propelled device (10), in particular floor cleaning device, such as a suction and/or sweeping and mopping robot, for mopping up a liquid accumulation (7), wherein the method comprises the following:
- navigating a floor area intended for cleaning in the direction of travel in the forward movement of the device (10) and cleaning the floor area with a dry-cleaning module (1) and/or a wet-cleaning module (2) of the device (10),
- detecting the liquid accumulation (7) in the direction of travel in front of the device (10) in a wet area,
- ending the forward movement in front of the wet area and rotating the device (10) about essentially 180°,
- navigating the wet area in the backward movement in the direction of travel of the device (10) and mopping the liquid accumulation (7) with the wet-cleaning module (2).

2. Method according to claim 1, wherein in the forward movement in the direction of travel of the device (10) a cleaning liquid supply of the wet-cleaning module (2) is in an active mode and in the backward movement in the direction of travel of the device (10) a cleaning liquid supply of the wet-cleaning module (2) is in an inactive mode.

3. Method according to one of the preceding claims, wherein the device (10) executes the backward movement in the direction of travel with one-sided rotational movements about 30° to 90° with respect to the backward movement, if the wet area is located arranged on one side with respect to the backward movement.

4. Method according to one of the preceding claims, wherein the device (10) executes the backward movement in the direction of travel with two-sided rotational movements about in each case 30° to 90° with respect to the backward movement, if the wet area is located arranged on both sides with respect to the backward movement.

5. Method according to one of the preceding claims 3 or 4, wherein the backward movement comprises the following steps:
- linear backward movement along a first short route toward the wet area,
- at one position rotating the device (10) about 30° to 90° on one or both sides,
- turning the device (10) back into its original starting position before the rotation, and
- continuing the linear backward movement of a second short stretch into the wet area.

6. Method according to claim 5, wherein the steps of rotating, turning back and continuing are repeated until the wet area is traversed.

7. Method according to one of the preceding claims, wherein a length of the wet area in the direction of travel is determined before rotating the device (10) upon detection of the liquid accumulation (7).

8. Method according to one of the preceding claims 1 to 6, wherein after navigating the wet area according to predetermined routes a presence of the liquid accumulation (7) is checked, by the device (10) in the direction of travel in the forward movement turning back and determining whether the liquid accumulation is still present.

9. Mobile, self-propelled device (10), in particular floor cleaning device, such as a suction and/or wiping and mopping robot, for mopping a liquid accumulation (7), wherein the device (10) comprises the following:
- a drive facility (3) for navigating a floor area to be cleaned,
- a dry-cleaning module (1) for dry cleaning the floor area, which is arranged in the direction of travel in the forward movement in a front area (5) of the device (10),
- a wet-cleaning module (2) for wet cleaning the floor area which is arranged in the direction of travel in the forward movement in a rear area (6) of the device (10),
- a detection facility (4) which is designed to detect a liquid accumulation (7) in a wet area and which is arranged in a front area of the device (10), and **characterised in that** the device (10) comprises the following:
- a processing facility which is designed, upon detection of the liquid accumulation (7), to rotate the device (10) before the liquid accumulation (8) about substantially 180° and to navigate the wet area in the backward movement in the direction of travel.

10. Mobile, self-driving device (10) according to claim 9, comprising a further detection facility, which is designed to detect the liquid accumulation (7) in the wet area and is arranged in a rear area of the device (10).

11. Mobile, self-propelled device (10) according to claim 9 or 10, wherein the wet-cleaning module (2) comprises at least a wiping unit and a container unit, wherein in an active mode the wiping unit is wet with liquid from the container unit and in an inactive mode a liquid supply of the container unit to the wiping unit is suspended.

## Revendications

1. Procédé de commande d'un appareil mobile automoteur (10), en particulier d'un appareil de nettoyage du sol, tel qu'un robot aspirateur et/ou de balayage et laveur de sol, pour essuyer une nappe de liquide (7), le procédé comprenant les étapes suivantes :
- le parcours sur une surface à nettoyer dans un déplacement vers l'avant, dans la direction de déplacement de l'appareil (10) et le nettoyage de la surface de sol avec un module de nettoyage à sec (1) et/ou un module de nettoyage humide (2) de l'appareil (10),
- la détection, devant l'appareil (10) dans la direction de déplacement, de la nappe de liquide (7) dans une zone humide,
- l'arrêt du déplacement vers l'avant avant la zone humide et la rotation de l'appareil (10) sensiblement de 180°,
- le parcours de la zone humide dans un déplacement vers l'arrière, dans la direction de déplacement de l'appareil (10) et l'essuyage de la nappe de liquide (7) au moyen du module de nettoyage humide (2).

2. Procédé selon la revendication 1, dans lequel un apport de liquide de nettoyage du module de nettoyage humide est dans un mode actif lors d'un déplacement vers l'avant dans la direction de déplacement de l'appareil (10) et dans un mode inactif lors d'un déplacement vers l'arrière dans la direction de déplacement de l'appareil (10).

3. Procédé selon l'une des revendications précédentes, dans lequel l'appareil (10) exécute le déplacement vers l'arrière dans la direction de déplacement en effectuant des mouvements de pivotement d'un seul côté d'un angle de 30° à 90° par rapport à la trajectoire de déplacement vers l'arrière, dans le cas où la zone humide est disposée d'un seul côté de la trajectoire de déplacement vers l'arrière.

4. Procédé selon l'une des revendications précédentes, dans lequel l'appareil (10) exécute le déplacement vers l'arrière dans la direction de déplacement en effectuant des mouvements de pivotement des deux côtés respectivement d'un angle de 30° à 90° par rapport à la trajectoire de déplacement vers l'arrière, dans le cas où la zone humide est disposée des deux côtés de la trajectoire de déplacement vers l'arrière.

5. Procédé selon l'une des revendications précédentes 3 ou 4, dans lequel le déplacement vers l'arrière comprend les étapes suivantes :
- déplacement vers l'arrière rectiligne sur un premier court trajet vers la zone humide,
- rotation de l'appareil (10) d'un côté ou de deux côtés de 30° à 90° à un endroit,
- rotation de retour de l'appareil (10) pour le ramener dans sa position de départ initiale avant la rotation, et
- reprise du déplacement dans un déplacement vers l'arrière rectiligne sur un deuxième court trajet pour progresser à l'intérieur de la zone humide.

6. Procédé selon la revendication 5, dans lequel les étapes de rotation, de rotation de retour et de reprise du déplacement se répètent jusqu'à ce que la zone humide soit parcourue.

7. Procédé selon l'une des revendications précédentes, dans lequel une longueur de la zone humide dans la direction de déplacement est déterminée lors de la détection de la nappe de liquide (7) avant la rotation de l'appareil (10).

8. Procédé selon l'une des revendications précédentes 1 à 6, dans lequel une présence de la nappe de liquide (7) est contrôlée après le parcours sur la zone humide dans des longueurs de trajet prédéfinies, en ce que l'appareil (10) effectue une rotation de retour dans un déplacement en marche avant dans la direction de déplacement et détermine si la nappe de liquide est encore présente.

9. Appareil mobile automoteur (10), en particulier appareil de nettoyage du sol, tel qu'un robot aspirateur et/ou de balayage et laveur de sol, pour essuyer une nappe de liquide (7), dans lequel l'appareil (10) comprend :
- un dispositif d'entraînement (3) pour faire circuler l'appareil sur une surface de sol à nettoyer,
- un module de nettoyage à sec (1) pour nettoyer à sec la surface du sol, qui est disposé, dans la direction de déplacement vers l'avant, dans une partie avant (5) de l'appareil (10),
- un module de nettoyage humide (2) pour nettoyer par voie humide la surface du sol, qui est disposé, dans la direction de déplacement vers l'avant, dans une partie arrière (6) de l'appareil (10),
- un dispositif de détection (4), qui est configuré pour détecter une nappe de liquide (7) dans une zone humide, et est disposé dans une zone frontale de l'appareil (10) ; et
**caractérisé en ce que** l'appareil (10) comprend en outre :
- un dispositif de traitement, qui est configuré pour faire tourner l'appareil (10) sensiblement de 180° avant la nappe de liquide (7) lors de la détection de la nappe de liquide (7) et pour lui faire parcourir la zone humide dans un déplacement vers l'arrière dans la direction de déplacement.

10. Appareil mobile automoteur (10) selon la revendication 9, comprenant un dispositif de détection supplémentaire, qui est configuré pour détecter la nappe de liquide (7) dans la zone humide, et qui est disposé dans une partie arrière de l'appareil (10).

11. Appareil mobile automoteur (10) selon la revendication 9 ou 10, dans lequel le module de nettoyage humide (2) comprend au moins une unité d'essuyage et une unité de réservoir, dans lequel l'unité d'essuyage est mouillée avec du liquide de l'unité de réservoir dans un mode actif et un apport de liquide de l'unité de réservoir à l'unité d'essuyage est interrompu dans un mode inactif.
